# EUROPEAN PATENT APPLICATION

(11) **EP 4 598 054 A1**
(43) Date of publication of application: **06.08.2025**
(21) Application number: 23870864.8
(22) Date of filing: 26.09.2023
(51) Int. Cl.: H04R 9/02

(54) **LOW RESONANCE STRUCTURE AND ELECTRONIC DEVICE**

(30) Priority: 30.09.2022 CN 202211231927
(71) Applicant: SSI New Material (Zhenjiang) Co., Ltd., Zhenjiang, Jiangsu 212006 (CN)
(72) Inventor: DING, Shuangshuang, Zhenjiang, Jiangsu 212006 (CN); GONG, Chang, Zhenjiang, Jiangsu 212006 (CN); WANG, Zhenzhen, Zhenjiang, Jiangsu 212006 (CN); ZHANG, Lei, Zhenjiang, Jiangsu 212006 (CN); GUO, Mingbo, Zhenjiang, Jiangsu 212006 (CN); MA, Yuanhong, Zhenjiang, Jiangsu 212006 (CN)
(74) Representative: Isern Patentes y Marcas S.L.
(86) International application number: PCT/CN2023/121739
(87) International publication number: WO 2024/067637

(57) **Abstract**

The present disclosure provides a low resonance structure and an electronic device. The low resonance structure is disposed in a shell (1) of an electronic device, and includes at least one functional module (7) and a damping medium (4). The shell (1) is provided with a first damping chamber (31) in which the damping medium (4) is located. The shell (1) includes a middle frame (12) and a housing (11) with an accommodating chamber (3) formed therebetween. A cover (5) is disposed in the accommodating chamber (3). The at least one functional module (7) is disposed on the middle frame (12). The first damping chamber (31) is formed between the functional module (7), the cover (5) and the housing (11). The present disclosure solves the problem of resonance of the shell (1) caused by airflow turbulence in the electronic device, reduces the impact of the airflow on the shell (1) and reduces the resonance of the electronic device, thereby optimizing the user experience.

## Description

### CROSS-REFERENCE TO RELATED APPLICATION

The present disclosure claims priority to Chinese Invention Patent Application No. 202211231927.7, filed on September 30, 2022, and entitled "low resonance structure and electronic device".

### TECHNICAL FIELD

The present disclosure relates to the field of acoustoelectric technologies, and in particular to a low resonance structure and an electronic device including the same.

### BACKGROUND

In modern mainstream electronic devices, the pursuit of high-quality audio performance from speakers or receivers has led to prevalent adoption of open acoustic chamber designs. This configuration features non-sealed rear chambers in speaker modules or receiver modules, allowing airflow into internal acoustic cavities of devices. However, turbulent airflow frequently induces resonance of the device's shell, resulting in perceptible vibrations when the user holds the shell. The vibrations intensify with increasing sound volume, ultimately compromising user experience. Consequently, designing optimized acoustic chamber structures of electronic devices to enhance holding comfort remains a critical challenge requiring urgent resolution.

In existing technologies, one type of electronic device employs a semi-open chamber design, where a damping element is installed on a leakage hole of the rear chamber to improve the compliance of the rear acoustic chamber while maintaining controllable leakage. This design can reduce resonance to some extent. Another type of electronic device in existing technologies adopts a design in which an acoustic guide channel is provided on the rear chamber of the speaker module and then is connected to an open acoustic chamber. By utilizing multiple directional changes and reflections within the vibration-damping channel, this design absorbs airflow vibration energy, thereby achieving airflow energy attenuation and mitigating housing resonance to a certain extent. However, both the semi-open chambers and chambers with acoustic guide channels can only mitigate housing resonance to a limited extent in practical applications. The housing resonance issue caused by the open acoustic chamber design in electronic devices still requires further resolution.

### SUMMARY

The present disclosure provides a low resonance structure and an electronic device. By filling a damping medium in an open acoustic chamber, the problem of the resonance of a shell of the electronic device caused by airflow turbulence in conventional open acoustic chamber designs can be solved, and the impact of the airflow on the shell can be reduced, thereby reducing the resonance of the electronic device and optimizing user experience.

The above objective of the present disclosure is mainly achieved by the following technical solutions.

The present disclosure provides a low resonance structure disposed in a shell of an electronic device. The low resonance structure includes at least one functional module and a damping medium, and the shell is provided with a first damping chamber in which the damping medium is located. The shell includes a middle frame and a housing with an accommodating chamber formed therebetween. A cover is disposed in the accommodating chamber. The at least one functional module is disposed on the middle frame. The first damping chamber is formed between the functional module, the cover and the housing.

The present disclosure further provides another low resonance structure disposed in a shell of an electronic device. The low resonance structure includes at least one functional module and a damping medium. The shell is provided with a second damping chamber in which the damping medium is located. The shell includes a screen module, a middle frame and a housing. The screen module is connected to the housing through the middle frame. The at least one functional module is disposed on the screen module. The second damping chamber is formed between the screen module and the middle frame.

The present disclosure further provides an electronic device, including a shell and the aforementioned low resonance structure mounted in the shell.

Compared with the prior art, the technical solutions of the present disclosure have the following characteristics and advantages:

By filling the damping medium inside the electronic device, the impact of the internal airflow on the shell of the electronic device is reduced, thereby reducing the resonance of the electronic device, optimizing the user experience and enhancing the competitiveness of the electronic device in the market.

### BRIEF DESCRIPTION OF THE DRAWINGS

For a clearer illustration of technical features in the embodiments of the present disclosure or the prior art, a brief description of the drawings for the embodiments or the prior art will be given below. The drawings described below involve only some embodiments of this disclosure. For those of ordinary skill in the art, other drawings can be derived from these drawings without any inventive efforts. In the drawings:
FIG. 1 illustrates a structural diagram of an embodiment of the present disclosure;
FIG. 2 illustrates a structural diagram of another embodiment of the present disclosure;
FIG. 3 illustrates an exploded structural diagram of an electronic device according to the present disclosure;
FIG. 4 illustrates frequency response curves of sound pressure levels of four groups of different test samples at different vibration frequencies; and
FIG. 5 illustrates impedance curves of three groups of different test samples at different vibration frequencies.

### Reference numerals:

1: shell; 11: housing; 111: rear cover; 12: middle frame; 2: electroacoustic transducer module; 21: speaker module ; 211: speaker unit; 22: vibration sounding module; 23: open rear chamber; 3: accommodating chamber; 31: first damping chamber; 32: second damping chamber; 4: damping medium; 5: cover; 6: screen module; 7: functional module.

### DETAILED DESCRIPTION OF THE EMBODIMENTS

In order that persons skilled in the art can better understand the technical solutions in the present disclosure, the technical solutions in the embodiments of the present disclosure will be described clearly and completely with reference to the drawings. Obviously, those described are only a part, rather than all, of the embodiments of the present disclosure. Based on the embodiments of the present disclosure, any other embodiment obtained by persons of ordinary skill in the art without paying creative effort should fall within the protection scope of the present disclosure.

It should be noted that when an element is referred to as being "disposed on" another element, it may be directly on another element or there may be an intervening element. When an element is considered to be "connected to" another element, it may be directly connected to another element or there may be an intervening element at the same time. The terms "vertical", "horizontal", "left", "right" and similar expressions used herein are for illustration purposes only and do not indicate a unique embodiment.

Unless otherwise defined, all technical and scientific terms used herein have the same meaning as those commonly understood by persons skilled in the technical field of the present disclosure. The terms used herein in the specification of the present disclosure are only for the purpose of describing the specific embodiments, and are not intended to limit the present disclosure. As used herein, the term "and/or" includes any and all combinations of one or more associated listed items.

### Embodiment 1

The present disclosure provides a low resonance structure, which is disposed in a shell 1 of an electronic device, and includes at least one functional module 7 and a damping medium 4. The shell 1 is provided with a first damping chamber 31 in which the damping medium 4 is located. The shell 1 includes a middle frame 12 and a housing 11 with an accommodating chamber 3 formed therebetween. A cover 5 is disposed in the accommodating chamber 3. The at least one functional module 7 is disposed on the middle frame 12. The first damping chamber 31 is formed between the functional module 7, the cover 5 and the housing 11.

The low resonance structure of the present disclosure includes a damping medium 4 disposed within the first damping chamber 31 that is formed between the functional module 7 and the shell 1. This configuration reduces the resonance influence of the functional module 7 on the shell 1 during operation of the functional module 7. The low resonance structure can significantly mitigate the impact on the shell 1 caused by airflow turbulence during operation of the functional module 7, thereby reducing resonance of the electronic device.

Specifically, the at least one functional module 7 is fixed on the shell 1 of the electronic device through the middle frame 12, and the cover 5 is connected to the middle frame 12 to assist in fixing the at least one functional module 7 on the middle frame 12.

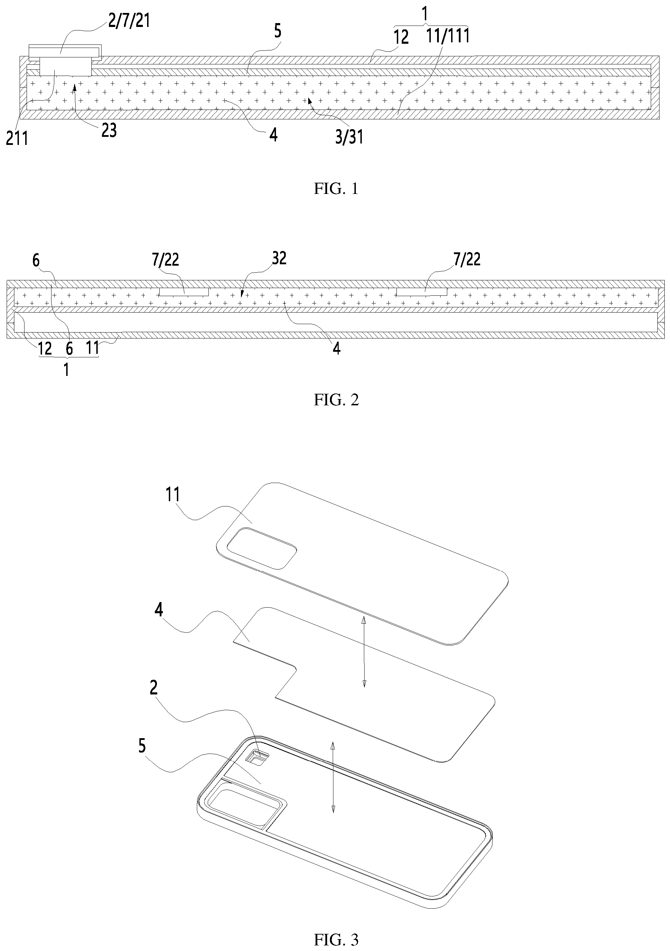

In the present disclosure, the function module 7 may be a speaker module, a receiver module, a camera module, a processor chip, a battery module, etc., and the electronic device may be a mobile phone, a notebook computer, a tablet computer, a wearable device or an AR/VR device, etc., without specific limitations herein. In the present disclosure, as illustrated in FIG. 1, the functional module 7 is an electroacoustic transducer module 2 having an open rear chamber 23 that is communicated with the first damping chamber 31, and the damping medium 4 is located in the open rear chamber 23 and the first damping chamber 31.

By filling the damping medium 4 between the shell 1 and the electroacoustic transducer module 2 that has the open rear chamber 23, the resonance influence of the electroacoustic transducer module 2 of the electronic device on the shell 1 during operation can be reduced. The low resonance structure can significantly mitigate the impact on the shell 1 caused by airflow turbulence generated during operation of the electroacoustic transducer module 2, thereby reducing resonance of the electronic device.

Specifically, referring to FIGS. 1 and 3, the electroacoustic transducer module 2 is fixed in the shell 1 of the electronic device. The electroacoustic transducer module 2 adopts an open acoustic chamber design, meaning the rear chamber of the electroacoustic transducer module 2 is directly communicated with the internal space of the electronic device. In this embodiment, the electroacoustic transducer module 2 is a speaker module 21, which is fixed on a rear cover 111 through the middle frame 12; the first damping chamber 31 is formed between the speaker module 21, the middle frame 12 and the rear cover 111; and a speaker unit 211 of the speaker module 21 can inserted into the first damping chamber 31.

Specifically, the combination structure of the rear cover 111 and the middle frame 12 limits the volume of the accommodating chamber 3, and the middle frame 12 is assembled with various modules of the electronic device such as the speaker module 21, the receiver module, the camera module, the processor chip, and the battery module. In this embodiment, the speaker module 21 is fixedly connected to the middle frame 12, and the open rear chamber 23 of the speaker module 21 is a fully open rear chamber, meaning that the speaker unit 211 of the speaker module 21 is exposed and can insert into the first damping chamber 31 defined by the accommodating chamber 3. The damping medium 4 is filled in the first damping chamber 31.

In order to verify that the damping medium 4 filled between the speaker module 21 and the rear cover 111 in the present disclosure can effectively reduce the impact on the rear cover 111 caused by airflow turbulence generated during operation of the speaker module 21, acoustic vibration tests are conducted on four groups of low resonance structures having the speaker modules 21 with different configurations, and the specific test conditions are as follows.

The low resonance structures having the speaker modules 21 with different configurations are subjected to a sounding vibration test, respectively, and a maximum acceleration value of the rear cover 111 of each group of low resonance structures is measured under the same test environment.
Test Group 1: the low resonance structure having the speaker module 21 with the open rear chamber 23 as described in the present disclosure is adopted, in which the first damping chamber 31 is not filled with the damping medium 4;
Test Group 2: the low resonance structure having the speaker module with a semi-open rear chamber is adopted, in which the speaker module is connected to a rear cover that has an open hole covered by a damping member;
Test Group 3: the low resonance structure having a speaker module with a rear chamber is adopted, in which the speaker module is connected to an acoustic guide channel that is filled with a damper member; and
Test Group 4: the low resonance structure having the speaker module 21 with the open rear chamber 23 as described in the present disclosure is adopted, in which the first damping chamber 31 is filled with the damping medium 4.

Test Conditions: the effective radiation area of the diaphragm of each speaker module is 70 mm², the resonant frequency of each speaker module is 800 Hz, the maximum amplitude of each speaker module is 0.5 mm, the volume of the rear chamber of each speaker module is 4 cm³ (in which length × width × height of the rear chamber is 150 mm × 60 mm × 0.45 mm), and the thickness of the rear cover is 0.6 mm.
The test results are shown in the following table:

| | Effective radiation area of diaphragm | Resonant frequency of speaker | Maximum amplitude | Volume of rear chamber | Thickness of rear cover | Maximum acceleration of rear cover |
|---|---|---|---|---|---|---|
| Test Group 1 | 70 mm² | 800 Hz | 0.5 mm | 4 cm³ | 0.6 mm | 2.41*10³ mm/s² |
| Test Group 2 | 70 mm² | 800 Hz | 0.5 mm | 4 cm³ (semi-open rear chamber) | 0.6 mm | 2.19 *10³ mm/s² |
| Test Group 3 | 70 mm² | 800 Hz | 0.5 mm | 4 cm³ (acoustic guide channel is added) | 0.6 mm | 1.84 *10³ mm/s² |
| Test group 4 | 70 mm² | 800 Hz | 0.5 mm | 4 cm³ (damping medium is filled) | 0.6 mm | 0.02 *10³ mm/s² |

As can be seen from the maximum acceleration of the rear cover 111 of each test group, the maximum acceleration of the Test Group 4 filled with the damping medium 4 is much smaller than that of any of the other three test groups. Therefore, by filling the damping medium 4 between the speaker module 21 and the rear cover 111, the impact on the rear cover 111 caused by airflow turbulence generated during operation of the speaker module 21 can be effectively reduced, thereby reducing the resonance of the electronic device.

According to an embodiment of the present disclosure, the damping medium 4 is filled into the first damping chamber 31 and the open rear chamber 23; alternatively, the damping medium 4 is a damping coating formed on an inner wall of the first damping chamber 31 by means of impregnating, coating or adhering.

Specifically, in a feasible embodiment, the damping medium 4 is directly filled into the first damping chamber 31 and the open rear chamber 23. In another feasible embodiment, the damping medium 4 serves as a damping coating formed on the inner wall of the first damping chamber 31 by means of impregnating, coating or adhering.

According to an embodiment of the present disclosure, the damping medium 4 is a granular or flaky structure composed of zeolite particles and a matrix medium.

Specifically, the matrix medium and the zeolite particles may be combined by spraying or other methods. For example, when the matrix medium is a granular or flaky structure: firstly, zeolite particles, adhesive and solvent may be mixed to form a uniformly dispersed suspension; then the suspension is mixed with the granular matrix medium by means of impregnating or spraying, or the suspension is sprayed and impregnated onto the surface of the flaky matrix medium; and subsequently, the mixture is dried and cured to obtain the final product, i.e., the damping medium 4.

In order to verify the damping effect of the damping media 4 with different configurations, vibration tests are conducted on three groups of damping media 4 with different configurations, and the specific test conditions are as follows.

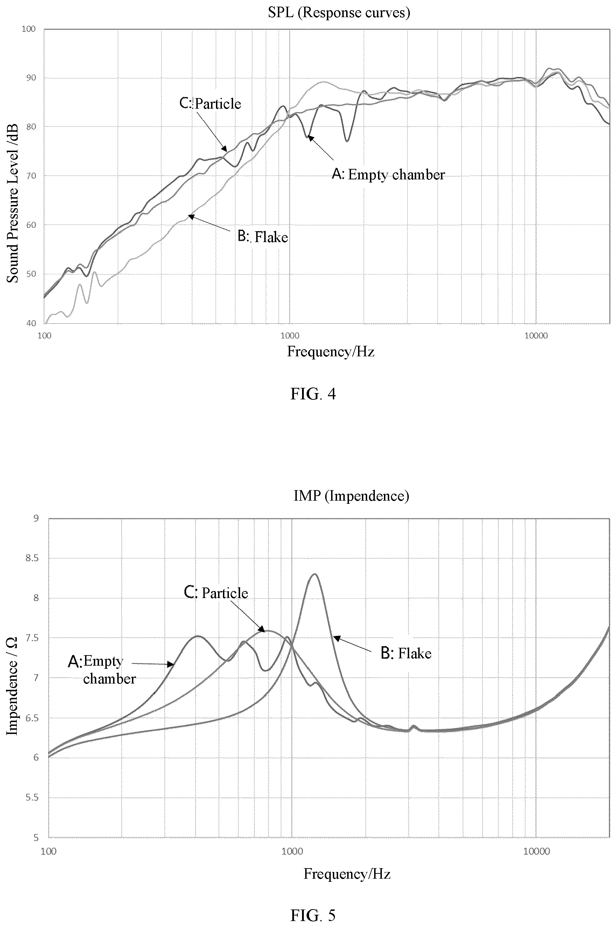

The rear covers 111 of the electronic device filled with different-configuration damping media 4 are subjected to a vibration test, respectively, and the sound pressure levels and the impedance values of each rear cover 111 at different vibration frequencies are monitored.
Test Conditions: a microphone is positioned facing the diaphragm surface of a speaker module, the speaker module is applied with a voltage of 1.5V, and an acoustic vibration test is performed in a free field of 0.05 m (i.e., the microphone is positioned 5 cm away from the speaker);
Test Number: there are three groups, i.e., group A, group B and group C;
Group A: the first damping chamber 31 is not filled with the damping medium 4;
Group B: the first damping chamber 31 is filled with the flaky damping medium 4;
Group C: the first damping chamber 31 is filled with the granular damping medium 4;
Test results: as illustrated in FIGS. 4 and 5, in which FIG. 4 illustrates the frequency response curves of three groups of different test samples at different vibration frequencies, and the unsmooth curves indicate that the samples have resonances at vibration frequencies corresponding to peaks/troughs; and FIG. 5 illustrates the impedance curves of three groups of different samples at different vibration frequencies, and the unsmooth curves indicate that the samples have resonances at vibration frequencies corresponding to peaks/troughs.

As can be seen from the peaks of the curves illustrated in FIG. 5, the low-frequency resonance peak of the samples of Group A (not filled with the damping medium 4) is 400\600\800Hz, and the resonance is obvious; the resonance frequency of the samples of group B (filled with the flaky damping medium 4) is about 1200Hz; and the resonance frequency of the samples of group C (filled with the granular damping medium 4) is 800Hz, and the sound pressure level near the resonance frequency is low. As can be seen from the impedance curves of FIG. 5, the impedance curves of Group B and Group C are relatively smooth, meaning that the resonance of the device can be obviously suppressed by filling the damping medium 4. Generally, the granular damping medium 4 has a better damping effect, and the flaky damping medium 4 can also achieve the damping of the device.

According to an embodiment of the present disclosure, the material of the matrix medium is sound-absorbing cotton, foam, carbon skeleton, or organic skeleton.

Specifically, the sound-absorbing cotton may be centrifugal glass wool, rock wool or mineral wool, etc., and/or may be glass fiber, polyester fiber or plant fiber, etc.; and the material of the foam is polyurethane, which is not specifically limited here.

According to an embodiment of the present disclosure, the damping medium 4 is a flaky structure formed by bonding glass fibers and zeolite particles. The thickness of the flaky structure is 0.15 mm to 0.05 mm. The porosity of the flaky structure is greater than or equal to 60%. The particle size of the zeolite particles is 5 µm to 200 µm.

### Embodiment 2

The present disclosure further provides a low resonance structure, which is disposed in a shell 1 of an electronic device. As illustrated in FIG. 2, the low resonance structure includes at least one functional module 7 and a damping medium 4. The shell 1 is provided with a second damping chamber 32 in which the damping medium 4 is located. The shell 1 includes a screen module 6, a middle frame 12 and a housing 11. The screen module 6 is connected to the housing 11 through the middle frame 12. The at least one functional module 7 is disposed on the screen module 6. The second damping chamber 32 is formed between the screen module 6 and the middle frame 12.

In the present disclosure, the functional module 7 is a vibration sounding module 22, which may be a moving magnetic actuator, a piezoelectric actuator or a hybrid actuator.

The low resonance structure of the present disclosure includes a damping medium 4 disposed within the second damping chamber 32 which is formed between the screen module 6 and the middle frame 12. This configuration reduces the resonance influence of the vibration sounding module 22 of the electronic device on the middle frame 12 and the housing 11 during operation of the vibration sounding module 22. The low resonance structure of the embodiment can significantly mitigate the impact on the middle frame 12 and the housing 11 caused by airflow turbulence and mechanical vibrations during operation of the vibration sounding module 22, thereby reducing resonance of the electronic device.

Specifically, the vibration sounding module 22 is cooperatively connected to the screen module 6 to drive the screen module 6 to generate sound. In the present disclosure, additional modules may be further assembled between the screen module 6 and the middle frame 12, with the remaining space between them forming the second damping chamber 32. In order to solve the problem that the middle frame 12 and the housing 11 are vibrated due to the airflow turbulence in the second damping chamber 32 caused by the vibration of the screen module 6, the damping medium 4 is filled in the second damping chamber 32, which can reduce the impact of the airflow turbulence on the middle frame 12 and the housing 11 during operation of the vibration sounding module 22, thereby reducing resonance of the electronic device.

According to an embodiment of the present disclosure, the damping medium 4 is a granular or flaky structure composed of zeolite particles and a matrix medium.

Specifically, the matrix medium and the zeolite particles may be combined by spraying or other methods. For example, when the matrix medium is a granular or flaky structure: firstly, zeolite particles, adhesive and solvent may be mixed to form a uniformly dispersed suspension; then the suspension is mixed with the granular matrix medium by means of impregnating or spraying, or the suspension is sprayed and impregnated onto the surface of the flaky matrix medium; and subsequently, the mixture is dried and cured to obtain the final product, i.e., the damping medium 4.

The damping test effects of the damping media 4 with different configurations have been explained in detail in Embodiment 1 through test data, and will not be repeated here.

According to an embodiment of the present disclosure, the material of the matrix medium is sound-absorbing cotton, foam, carbon skeleton, or organic skeleton.

Specifically, the sound-absorbing cotton may be centrifugal glass wool, rock wool or mineral wool, etc., and/or may be glass fiber, polyester fiber or plant fiber, etc.; and the material of the foam is polyurethane, which is not specifically limited here.

According to an embodiment of the present disclosure, the damping medium 4 is a flaky structure formed by bonding glass fibers and zeolite particles. The thickness of the flaky structure is 0.15 mm to 0.05 mm. The porosity of the flaky structure is greater than or equal to 60%. The particle size of the zeolite particles is 5 µm to 200 µm.

### Embodiment 3

The present disclosure further provides an electronic device, which includes a shell 1 and the aforementioned low resonance structure mounted in the shell 1. The specific structure, the working principle and the advantageous effects of the low resonance structure are the same as those of the low resonance structure according to Embodiment 1 and Embodiment 2, and will not be repeated here. The low resonance structure inside the electronic device can significantly mitigate resonance during the use of the electronic device and optimize user experience.

Specifically, the electronic device may be a mobile phone, an audio device, a notebook computer, a tablet computer, a teleconferencing device, a wearable device or an AR/VR device, an automobile, a smart home device, and the like with the low resonance structure, and is not specifically limited here.

The specific embodiments described above further explain the objectives, the technical solutions and the advantageous effects of the present disclosure in detail. It should be understood that those described above are only specific embodiments of the present disclosure and are not intended to limit the protection scope of the present disclosure. Any modification, equivalent substitution, improvement, etc. made within the spirit and principle of the present disclosure should be included in the protection scope of the present disclosure.

## Claims

1. A low resonance structure disposed in a shell of an electronic device, wherein the low resonance structure comprises at least one functional module and a damping medium, and the shell is provided with a first damping chamber in which the damping medium is located;
wherein the shell comprises a middle frame and a housing with an accommodating chamber formed therebetween, a cover is disposed in the accommodating chamber, the at least one functional module is disposed on the middle frame, and the first damping chamber is formed between the functional module, the cover and the housing.

2. The low resonance structure according to claim 1, wherein the functional module is an electroacoustic transducer module having an open rear chamber that is communicated with the first damping chamber, and the damping medium is located in the open rear chamber and the first damping chamber.

3. The low resonance structure according to claim 2, wherein the electroacoustic transducer module is a speaker module, the housing is a rear cover of the electronic device, and the first damping chamber allows a speaker unit of the speaker module to be inserted into it.

4. The low resonance structure according to claim 2, wherein the damping medium is filled into the first damping chamber and the open rear chamber; or, the damping medium is a damping coating formed on an inner wall of the first damping chamber by means of impregnating, coating or adhering.

5. The low resonance structure according to claim 4, wherein the damping medium is a granular or flaky structure composed of zeolite particles and a matrix medium.

6. The low resonance structure according to claim 5, wherein the matrix medium is made of a material selected from sound-absorbing cotton, foam, carbon skeleton, or organic skeleton.

7. The low resonance structure according to claim 1, wherein the damping medium is a flaky structure formed by bonding glass fibers and zeolite particles; and
the flaky structure has a thickness of 0.15 mm to 0.05 mm and a porosity of no less than 60%, and the zeolite particles have a particle size of 5 µm to 200 µm.

8. A low resonance structure disposed in a shell of an electronic device, wherein the low resonance structure comprises at least one functional module and a damping medium, and the shell is provided with a second damping chamber in which the damping medium is located;
wherein the shell comprises a screen module, a middle frame and a housing, the screen module is connected to the housing through the middle frame, the at least one functional module is disposed on the screen module, and the second damping chamber is formed between the screen module and the middle frame.

9. The low resonance structure according to claim 8, wherein the functional module is a vibration sounding module, which is a moving magnetic actuator, a piezoelectric actuator or a hybrid actuator.

10. The low resonance structure according to claim 9, wherein the damping medium is a granular or flaky structure composed of zeolite particles and a matrix medium.

11. The low resonance structure according to claim 10, wherein the matrix medium is made of a material selected from sound-absorbing cotton, foam, carbon skeleton, or organic skeleton.

12. The low resonance structure according to claim 8, wherein the damping medium is a flaky structure formed by bonding glass fibers and zeolite particles; and
the flaky structure has a thickness of 0.15 mm to 0.05 mm and a porosity of no less than 60%, and the zeolite particles have a particle size of 5 µm to 200 µm.

13. An electronic device, comprising a shell and the low resonance structure according to any one of claims 1 to 12 mounted in the shell.
